# EUROPEAN PATENT APPLICATION

(11) **EP 4 299 533 A1**
(43) Date of publication of application: **03.01.2024**
(21) Application number: 23178205.3
(22) Date of filing: 08.06.2023
(51) Int. Cl.: C02F 1/52, C02F 1/58, C02F 1/20, C02F 3/28, C02F 1/66, B01D 53/00, C05F 7/00

(54) **A METHOD FOR TREATING WASTEWATERS FROM ANAEROBIC DIGESTION, A SYSTEM FOR TREATING WASTEWATERS, USE OF DRY LIME COMPOSITION AND A FERTILIZER PRODUCT**

(30) Priority: 30.06.2022 FI 20225601
(71) Applicant: Envor Group Oy, 30420 Forssa (FI)
(72) Inventor: Klimeski, Aleksandar, 30300 Forssa (FI)
(74) Representative: Berggren Oy

(57) **Abstract**

The application relates to a method and system for treating wastewaters from anaerobic digestion, the method comprising providing wastewater from anaerobic digestion, providing a lime composition comprising 80% by weight or more calcium hydroxide (Ca(OH)₂) in dry powdery form, mixing the lime composition in the dry powdery form with the wastewater at a temperature of 50°C or more, continuing the mixing to precipitate suspended solids and P to obtain a precipitate and a supernatant and optionally to release NHs, and recovering the precipitate. The present application also relates to a fertilizer product obtained by the method and to use of dry lime-based industrial byproduct for treating wastewaters from anaerobic digestion.

## Description

### Technical field

The present application relates to a method for treating wastewaters from anaerobic digestion and a system for carrying out such treatment. The present application also relates to products obtained from such treatment, such as fertilizer products. The present application also relates to use of dry lime compositions for treating the wastewaters.

### Background

It is desired to treat wastewaters to remove and/or recover certain substances, such as undesired substances or valuable substances. There is a great variety of wastewaters containing variable amounts of suspended and/or soluble substances, so that different treatment methods must be applied.

Common chemical wastewater treatment methods exploit iron (Fe), aluminium (Al) salts or lime milk as precipitants. The removals of suspended solids and phosphorus (P) in these processes rely mostly on the formation of compounds with relatively low solubility such as Fe, Al or calcium (Ca) phosphates and carbonates.

Iron/aluminium chlorides or sulphates are rather efficient when treating common municipal wastewaters and relatively small amounts of these chemicals are required. However, not all wastewaters can be efficiently treated with these or other prior art substances. Especially wastewaters having high contents of suspended solids, ammonium (NH₄) and dissolved P are challenging to treat. For example the buffering capacity provided by the (NH₄-ammonia (NH₃) system in such waters, as well as the amount and type of solids greatly resist the effect of conventional precipitating agents. Therefore there is a need to find new substances and methods for treating challenging wastewaters.

### Summary

In the present invention it was found out how to efficiently treat challenging wastewaters and to precipitate substances such as suspended solids, P and other substances. It was also found out how to simultaneously remove NH₄ from the water. It was also found out how to provide a method for efficiently treating wastewaters from anaerobic digestion to counteract the exceptionally high buffering capacity of the wastewaters from anaerobic digestion and to compactly precipitate suspended solids and phosphorus while releasing ammonia.

As a result it was also possible to obtain a sustainable agricultural fertilizer, that can be used in a variety of end uses and targets. The process was carried out at elevated temperatures by treating waste or reject water with high dosages of lime compositions.

The present disclosure provides a method for treating wastewaters from anaerobic digestion, the method comprising
- providing wastewater from anaerobic digestion,
- providing a lime composition comprising 80% by weight or more, such as 80-99% by weight, calcium hydroxide (Ca(OH)₂) in dry powdery form,
- mixing the lime composition in the dry powdery form with the wastewater at a temperature of 50°C or more to obtain a mixture comprising 20 g or more of the lime composition/l wastewater,
- continuing the mixing to precipitate suspended solids and P to obtain a precipitate and a supernatant and to release NH₃, and
- recovering the precipitate.

The present disclosure also provides a wastewater treatment system arranged to receive wastewaters directly from an anaerobic digestion plant comprising one or more reactors for anaerobic digestion and preferably for biogas production, the wastewater treatment system comprising
-one or more wastewater treatment reactors,
-one or more mixers in the one or more reactors,
-one or more heating means,
-one or more aerating means, such as mixers and/or source of air,
-an ammonia scrubber or a liquefaction unit,
-an inlet for providing lime composition in dry form to the reactor,
-an inlet for providing acid to the reactor,
-an outlet for removing precipitate from the reactor,
-an outlet for removing supernatant from the reactor, and
-an outlet for conveying released NH₃ to the ammonia scrubber or to the liquefaction unit, wherein the wastewater treatment system comprises controlling means arranged to control the wastewater treatment system to carry out the method.

The present disclosure also provides use of a dry lime composition comprising 80% by weight or more, such as 80-99% by weight, calcium hydroxide (Ca(OH)₂) for treating wastewaters from anaerobic digestion.

The present disclosure also provides a fertilizer product obtained with the method.

The main embodiments are characterized in the independent claims. Various embodiments are disclosed in the dependent claims. The embodiments and examples recited in the claims and the specification are mutually freely combinable unless otherwise explicitly stated.

The present method and system are scalable and enable providing an industrial scale method and system, which can be implemented in existing systems providing wastewater.

The present wastewater treatment method contributes to concepts of sustainability and circular economy. It is possible to utilize materials considered as waste and produce valuable end products.

### Brief description of the figures

Figure 1 shows a flow chart of the method
Figure 2 shows an schematic example of a system for treating wastewaters from a biogas plant
Figure 3 shows photos from precipitation tests. Figure 3a and 3b show photos from precipitation with FeCl₃, Figure 3c-f show photos from precipitation with Al salts
Figure 4 shows photos from precipitation tests using the present lime composition
Figure 5 shows photos from precipitation tests using the present lime composition
Figure 6 shows a photo from a large scale system setup

### Detailed description

In this specification, percentage values, where applicable and unless specifically indicated otherwise, are based on weight (w/w, by weight, or wt%). If any numerical ranges are provided, the ranges include also the upper and lower values. The open term "comprise" also includes a closed term "consisting of" as one option. The diameters disclosed herein, unless specifically indicated otherwise, may refer to the smallest diameter, and may be presented as average or number-average diameter and may be determined microscopically. A dedicated software, such as provided by the microscope manufacturer, can be used to analyze and/or to output results.

The treatment of most wastewaters is relatively straightforward. In municipal wastewaters or black water (includes biowaste and human feces), for example, the concentration of suspended solids, NH₄ and dissolved P are typically 650 mg/I, 130 mg/l and 20 mg/l respectively. To efficiently treat black water, the required amounts of Fe and Al are 100 mg/l and 50 mg/l, respectively whereas the amount of slaked lime could reach 300 mg/l. However, it was shown that the plant availability of Fe and Al phosphates is rather limited.

The use of Ca(OH)₂ in wastewater treatment has been a relatively old practice. Usually, this practice involves the addition of "lime milk" i.e. saturated aqueous solution of lime. Slaked lime has a relatively low solubility in water (1.6 g/l), which requires using high volumes of lime milk. The purpose is to elevate the pH of the water solution above 9.5 so that to initiate the precipitation of Ca carbonates and phosphates.

However when the content of suspended solids, NH₄ and dissolved P is higher, the treatment of such wastewater is more challenging. In one typical example concentrations of suspended solids, NH₄ and dissolved P in the reject water used in accordance of the present methods, such as reject water arising from anaerobic digestion, are about 2000 mg/l, 2200 mg/l and 90 mg/l, respectively. Thus, it is a challenge to treat reject water arising from anaerobic digestion because of its high alkalinity, for example about 10 000 mg calcium carbonate (CaCO₃/l), high buffering capacity (NH₄/NH₃ buffer) and elevated amounts of specific types of suspended solids.

The wastewaters from anaerobic digestion, or anaerobic processes, as discussed herein, which may be considered as challenging in respect of treatment, such as removal of solids, P and/or NH₄, and optionally other substances, may be specified as having a concentration of suspended solids of 1000 mg/l of the wastewater or more, 1500 mg/l or more, 1800 mg/l or more, or even 2000 mg/l or more.

The concentration of NH₄ in the wastewater may be 1000 mg/l or more, such as 1500 mg/l or more, 2000 mg/l or more, or even 2200 mg/l or more. The concentration of soluble P in the wastewater may be 50 mg/l or more, such as 80 mg/l or more or even 100 mg/l or more. The alkalinity of such wastewater may be 8000 mg CaCO₃/l or more, such as 9000 mg/l or more, even 10 000 mg/l or more.

The present wastewaters usually have a biochemical oxygen demand (BOD) and chemical oxygen demand (COD) of over 2000 and 6000 mg/l, respectively.

The present disclosure provides a method for treating wastewaters from anaerobic digestion, or anaerobic processes, the method comprising providing wastewater from anaerobic digestion, or anaerobic process. The method may comprise providing wastewater directly from anaerobic digestion or anaerobic process. In such case the wastewater may be conveyed from the anaerobic digestion or process to the wastewater treatment without transferring or transporting it to another location for example by vehicles, and/or without storing the wastewater in a separate storage at another location. For example, an anaerobic digestion plant may be connected to the wastewater treatment system with a pipe or the like means and the wastewater treatment is carried out at the close vicinity of the plant, or at the plant. There however may be an intermediate container for short-time storage of the wastewater, which enables for example controlling the feeding of the wastewater and implementing a batch process. The wastewater may be also transported to the treatment in one or more movable containers.

The method can be implemented at a plant utilizing anaerobic processes, such as at a biogas plant or the like, and the system can be implemented at already existing plants and systems. Also other types of wastewaters may be applied as well, but the benefits and effects of the present method are especially useful in the wastewaters from anaerobic processes. Anaerobic digestion of organic material, which takes place for example in biogas production and other applicable anaerobic processes of organic material, produces a specific waste, such as wastewaters, which may be also called rejects or effluents. In general these wastewaters are different for example from municipal wastewaters or industrial wastewaters. The anaerobic process may initiate elevation of certain substances in the wastewater, which makes the wastewaters more challenging to treat. Many commonly used precipitants were found unsuitable for treating wastewaters from anaerobic digestion.

The method for treating wastewaters may be a method for purifying wastewaters and/or a method for removing solids, P, and/or a method for releasing and/or removing NH₃ from the wastewater.

Different precipitants were tested for such wastewaters and the results showed that Fe and Al-containing salts are not suitable because they initiate excessive foaming without inducing efficient precipitation. The foaming possibly results from gas production (mainly carbon dioxide (CO₂)) as the addition of these precipitants lowers the pH of the reject water with high alkalinity. The use of conventional lime milk was also found unsuitable for the present purposes as it was difficult to obtain efficient precipitation and it required high volume of the lime milk. However using solid Ca(OH)₂ was not obvious, and it was found out that the form and concentration of the solid lime composition, as well as the way of adding the composition to the wastewater had a great impact to the efficiency of the process and to the result, such as to the form of the obtained precipitate. It was found out that the present solid dry lime composition can be added directly to the wastewater. No further flocculants or the like agents are required.

The present invention reveals that the use of a lime composition comprising mainly Ca(OH)₂ in dry, preferably in granular or powdery, form is efficient for treating wastewaters from anaerobic digestion. The Ca(OH)₂ concentration shall be high enough to enable the process described herein, such as 80% by weight or more, preferably 85% by weight or more, even 87% by weight or more, and up for example to 95%, 96%, 97%, 98%, 99% or 99.5% by weight. The composition may comprise an amount of other substances, such as substances comprising P and magnesium (Mg), which may be considered impurities and which may originate from the production process of the lime composition. These substances may be used to identify the origin of the lime composition, for example certain industrial by-processes produce lime compositions have a characteristic composition of substances. The Ca(OH)₂ concentration may be 80-99% by weight, such as 85-99% by weight, for example 87-95% by weight of the total composition. The concentrations refer to dry weight.

The "composition" as used herein may refer to a mixture of substances, which may be separate and/or bound to each other. The precipitation caused by the dry composition, preferably as a fine powder, was efficient and the use of the present lime composition was able to provide Ca- and P-rich sludge with a good plant availability as an end product. The volume of the treated water did not increase substantially, which would be the case if substances would be added as solutions or dispersions. This enables implementing the system in relatively compact form thus requiring lower investments, and enabling efficient control over the process.

The lime composition may be obtained from a source, which is considered as waste, by-product, side product or the like material, which may have no or little value as such, or even negative value as investments are often required to treat waste material, and which therefore may be seen as problematic material. In the present method such lime composition can be used as valuable reagent and raw material in methods, which also enable forming valuable materials from waste. Therefore at least two material sources considered as waste or problematic material can be combined to decrease the amount of forming waste, lower costs relating to waste processing, and to produce valuable material as end product, which may be used for example as a fertilizer.

The present experiments proved that a dry lime-based industrial by-product containing Ca(OH)₂ can efficiently precipitate the reject water, without causing any foaming, and resulting in the formation of a compact sludge. Thus, the present disclosure shows that it is possible to exploit the lime-based industrial by-product as precipitant and also identifies the favourable conditions for the precipitation of reject water from bioreactors at elevated temperatures resulting in the production of a nutrient-rich fertilizer that is low in heavy metals. It was found out that not all industrial by-products are suitable for the present purposes.

In one embodiment the lime composition or lime material comprises or is a lime-based industrial by-product preferably containing slaked lime, for example comprising 85-99% by weight calcium hydroxide (Ca(OH)₂), such as 87-95% by weight.

It was found out that such a dry by-product already available in large amounts, is especially suitable for treating the present wastewaters. Especially powdery forms of the dry lime compositions were found to facilitate the precipitation of the substances present in the wastewater, and high dosages can be used with low costs. Furthermore, if the material is a by-product of an industrial process, it is especially suitable in methods of circular economy so no preparation of specific reagents and/or purified or highly processed materials is required. The material may be available as already screened, so the particle size and/or particle size distribution may be already specified.

The density of the dry lime composition may be in the range of 500-750 kg/m³, 700-750 kg/m³, or 720-740 kg/m³.

In one example a lime composition obtained as a by-product from an industrial process comprises 0.40-0.45% by weight P and 0.50-0.55% by weight Mg. The lime composition may further comprise 50-60% by weight Ca. The lime composition may further comprise 0.50-0.55% by weight Cr, 1.2-1.5% by weight Zn, and trace amounts (for example 0.006-0.0007% by weight) of Cd, As, Hg, Ni, and/or Pb. However the amounts of these impurities are far below the maximum permissible concentrations, so the lime composition is environmentally safe and also safe to use. Also products obtained by precipitating with the lime composition are safe and can be used in a variety of targets.

Lime compositions containing Ca(OH)₂ (slaked lime) are in general produced after the reaction of quicklime with water. Quicklime is created when high quality, natural deposits of limestone, which comprise CaCOs, are subjected to extreme heat in a lime kiln. Once crushed and sized, CaCOs is fed into kilns where it is calcined at temperatures of 1000°C or more. During this process the extreme heat causes CaCOs to decompose and form quicklime (CaO) and CO₂. Afterwards, water is added to the quicklime to form slaked lime (Ca(OH)₂). The reaction is as follows: CaO + H₂O → Ca(OH)₂.

In one example the lime-based industrial by-product is obtained from a calcining process producing CaO. A part of the fine material formed in the calcining process, which may be obtained by screening, is used for preparing Ca(OH)₂. An exact amount of water is added to the quicklime and mixed. In the reaction fine Ca(OH)₂ is formed.

Two features that contribute to the efficiency of lime composition are the particle size and the Ca(OH)₂ content. The experiments revealed that lime compositions containing particles of about 3 mm and smaller efficiently precipitated the reject water. Using lime mixtures with larger particles greatly reduces their efficiency. Most probably, the efficiency of the smaller particles stems from their aggregation with the suspended and precipitated solids in the solution and the subsequent formation of larger agglomerates that settle rather rapidly. In addition to the particle size, the concentration of Ca(OH)₂ in the lime composition should be sufficient to counteract the buffering capacity of the reject water and increase the pH over 12 while at the same time Ca ions react with carbonates and phosphates to form Ca-carbonates/phosphates. Thus, lime composition with fine particles (smaller than 3 mm) and Ca(OH)₂ concentration of over 80% proved to be the most efficient ones.

In one embodiment the lime composition is present as a powdery form, preferably having an average particle diameter of 3 mm or less, such as 2 mm or less, for example in the range of 3.0-0.1 mm, such as 3.0-0.5 mm 2.5-0.1 mm or 2.0-0.1 mm.

The lime composition can be provided as dry or substantially dry, such as having a dry matter content of 100% or substantially 100%, such as in the range of 90-100%, 95-100%, 97-100%, 98-100%, 99-100% or 95.5-100%. However storing at ambient conditions may increase the moisture content, as the material may be hygroscopic, for example the dry matter content may be in the range of 80-100%, 80-95%, or 80-90% by weight, so it may be desired to store the lime composition in air and/or moisture proof container or package, such as in a sealed or closed container or package. The absorbed ambient moisture does not prevent the material to provide the precipitating effect, but the effect may be lower compared to a drier material.

The dry lime composition may be added quickly, for example by using a suitable feeding means, such as a feeder, for example a screw feeder or the like, which may be included in an inlet for providing the lime composition in dry form. The feeding means may be controllable, such as operatively controllable by controlling means. This enables providing relatively high dosages of the lime composition, such as 20 g/l or more, preferably 30 g/l or more, in a controlled manner. Higher amounts are usually required when treating reject waters and the like with higher amounts of suspended solids and NH₄. It was found out that a lime composition in fine powdery form dissolved quickly when added and mixed, and caused an immediate pH increase to 12 or above and precipitation of substances. High lime concentrations could be therefore provided in the treated water in a relatively short time.

In one embodiment the lime composition is provided in an amount of 20-70 g/l wastewater, such as 30-50 g/l, 30-60 g/l, 30-70 g/l, 40-60 g/l or 50-70 g/l. The lime composition may also be provided in an amount providing 20-70 g calcium hydroxide/l wastewater, such as 30-50 g/l, 30-60 g/l, 40-60 g/l or 50-70 g/l. The amounts may be based on dry weight of the lime composition.

It is also preferred to obtain or provide a high enough pH to ensure efficient precipitation in the wastewaters from anaerobic digestion, in general to obtain a mixture having a pH of 12 or more, or 12.5 or more. In many cases the water from the anaerobic digestion are already slightly alkaline, but the pH is well below 12. However it was found out that a suitable powdery lime composition was able to increase the pH of the wastewater, or the mixture comprising the wastewater, to 12 or more, which substantially enhanced the precipitation. In tests not all lime compositions were able to increase the pH high enough, and the pH remained at about 11 in some cases, which clearly had an adverse effect to the precipitation. Therefore a preferred lime composition can be characterized by its ability to increase the pH of the wastewater/mixture to 12 or more, preferably in a short time such as 10 minutes or less, such as 1-10 minutes or 5-10 minutes. In one embodiment the method comprises providing pH of the mixture of 12 or more, or 12.5 or more, or obtaining a mixture having a pH of 12 or more. The lime composition may be provided in an amount and/or in a rate capable of increasing the pH of the wastewater to 12 or more, preferably to about 12.5 or more. The mixing may be carried out at least until the pH has increased to 12 or more, preferably to about 12.5 or more.

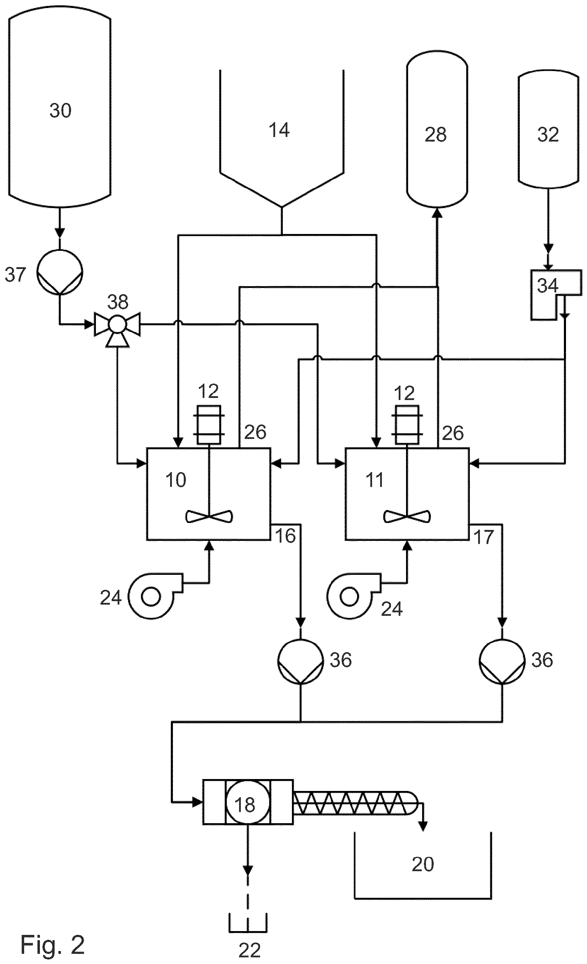

The treated water may be provided in and/or to a tank, a reactor or other suitable container, which is used to carry out the present method, and the lime composition may be provided to the container. There may be one or more containers, such as a first, a second and optionally further containers. The example of Figure 2 shows two containers: a first reactor 10 and a second rector 11. The container may be equipped with further means for carrying out the process, as discussed herein. The "water" used herein may refer to any suitable aqueous liquid, suspension and/or solution, which may be treated with the present method, such as wastewater, effluent or the like.

The wastewater may be conveyed directly from the anaerobic digestion, such as from an anaerobic treatment rector, bioreactor, device, plant and/or the like source, or a wastewater tank of such source. One or more tubes may be arranged from the source for conveying the wastewater to the tank, reactor or other suitable container. One or more pumps and/or other actuators may be provided, controlled and used for facilitating the conveying. The wastewater may be provided from, or conveyed to, one or more intermediate wastewater tank(s), which may be part of the plant and/or the present system, wherefrom it can be controllably provided or conveyed to the present process, for example in amounts capable of filling the reactor(s) of the present system, for example to provide a batch.

The process may be carried out as a batch process or as a continuous process, or combination thereof. Batch process is suitable for most uses.

The method comprises mixing the lime composition with the wastewater to obtain a mixture, preferably at a temperature of 50°C or more, such as 60°C or more, or 70°C or more, up to for example 80°C, 90°C or 100°C. The mixing may be implemented by providing and using one or more mixing means, such as mixers, agitators, pumps, source(s) of gas, steam and/or liquid, and/or with other suitable means, devices, actuators and/or the like. The mixing means are arranged to mix the contents of the tank(s), rector(s) or other container(s).

The temperature of the water may be in, or increased to, the range of 50-100°C, or the range of 60-100 °C, during the process, preferably already before the lime composition is added. The temperature may be increased by using a heated medium, such as steam. The tank, reactor or container may be equipped with heating means arranged to heat the tank(s), rector(s) or other container(s), especially the contents thereof. The heating means may comprise one or more heating element(s), which may be electrical element(s) and/or elements providing circulation of heated medium, such as oil or aqueous solution, for example in a sheath of a reactor or tank. Steam may be provided at a high temperature of 100°C or more, such as 150°C or more, for example in the range of 120-180°C, such as 150-170°C. The steam may be directed to the water in the container, and it may also contribute to mixing and/or aerating.

The method comprises continuing the mixing to precipitate suspended solids, P and optionally other substances from the wastewater or the mixture while obtaining a solids fraction, *i.e.* a precipitate, and a water fraction or an aqueous fraction, *i.e.* a supernatant. NH₃ can be released from the water fraction to obtain a gas fraction. The mixing may be carried out for a period of time required to obtain desired precipitation, for example 10-30 minutes, 5-20 minutes or 10-20 minutes. In many cases about 15 minutes in mixing was enough to cause substantial precipitation. During mixing a large part of the lime composition remains undissolved, *i.e.* as suspended in the wastewater.

However it was found out that this has a great impact on facilitating the precipitation.

After mixing sedimentation of suspended lime and precipitated solids occurs rapidly and obvious separation of nutrient-rich sludge occurs. The sedimentation may take for example 0.5-2 hours, such as about 1 hour in many cases. The method may comprise allowing the solids to settle, for example for at least 30 minutes, at least 60 minutes, at least 90 minutes or at least 120 minutes.

Part of NH₃ is released simultaneously during mixing. However it is desired to release and remove further NH₃. The method may comprise a subsequent release and removal of NHsfrom the wastewater. NH₃ is evaporated from the aqueous fraction separated from the mixture and it may be conveyed to further processing, such as one or more NH₃ scrubber(s) or liquefaction unit(s), wherein the NH₃ may be converted into ammonium sulphate and recovered.

Due to relatively high solubility of NH₃, the treated water, *i.e.* the supernatant, should be efficiently agitated in order to release the NH₃, for example, by aeration or sprinkling. The aeration or sprinkling may also facilitate additional carbon removal. The aeration may be implemented by providing and using one or more aerating means, such as an aerating device, and/or a sprinkling means, such as a sprinkling device, for example a sprinkler, a mixer, a source of gas, such as air, and/or with other suitable means, devices, actuators and/or the like. The aeration or sprinkling may be started and/or carried out after the precipitation and/or sedimentation has been completed and the sediment is separated from the supernatant and preferably removed. In one embodiment the method comprises aerating the supernatant to remove NH₃. The required air volume at the process temperature to facilitate the release and removal of NHsmay be 5000 or more m³/m³ treated water, 7000 or more m³/m³ treated water, or 9000 m³/m³ treated water.

After removing NH₃ it is preferred to neutralize the remaining water/supernatant. In one embodiment the method comprises adding acid to the supernatant after removing the NH₃ to neutralize the supernatant, such as to obtain a pH in the range of 6-8, preferably about 7. This may be carried out in the reactor. As a result purified water is obtained, which may be conveyed to further use or to water treatment.

The method comprises recovering the precipitate, which may be called as solids fraction, sludge, solid sludge, solids, precipitate, sediment, separated material, combination thereof or other suitable expression. The precipitate may be in a form of a sludge having a dry matter content in the range or 10-20% by weight, such as 12-18% by weight. The solids are already separated from the liquid phase due to sludge compactness, but the separation may be further facilitated by using a filter, by pressing, such as with a screw press and/or other separation means.

The separated material may be dewatered, for example to obtain a dry matter content of at least 50% by weight, at least 60% by weight or at least 70% by weight. A dry matter content in the range of 70-90% by weight, such as about 80% by weight can be easily obtained in most cases. The separated material may be further dewatered or dried in other process, and/or otherwise further processes. Purified water is obtained from the process.

The separated material comprising the solids may comprise, as a dry weight, total P in the range of 0.4-1 g/kg, such as 0.4-0.8 g/kg, and/or total Ca in the range of 350-450 g/kg, such as 380-440 g/kg. The pH of the material may be 12 or more, such as 12.5 or more. In most cases the pH was about 12.5.

The obtained separated material may be provided as an end product, such as a fertilizer product, a landfill product or any other suitable product. The separated material may be packed and preferably delivered to final use. The end product obtained from the present method is in a form which can be used for fertilizer purposes as such, and no addition of further substances is necessary. For example the agglomerates formed in the process bind and stabilize the nutrients and allow prolonged release and good bioavailability of the nutrients in the soil.

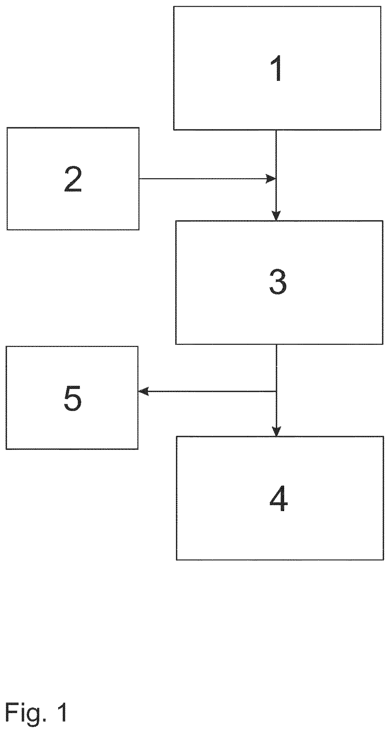

Figure 1 shows a flowchart disclosing a simplified example of the present method. In step 1 wastewater is provided, and lime composition 2 is combined with the wastewater to form a mixture 3. Solids are precipitated from the mixture 3 and are recovered in step 4, and NH₃ 5 may be separated and recovered. The method may be implemented by using a suitable wastewater treatment system or apparatus, such as disclosed herein.

In one embodiment the method comprises
- providing wastewater from anaerobic digestion,
- providing a lime composition comprising 85-99% by weight Ca(OH)₂ in dry powdery form having an average particle diameter of 3 mm or less,
- mixing the lime composition with the wastewater at a temperature of 50°C or more to obtain a mixture having a pH of 12 or more,
- continuing the mixing to precipitate suspended solids and P to obtain a precipitate and supernatant and to release NH₃,
- recovering the precipitate,
- aerating the supernatant to remove NH₃, and
- neutralizing the supernatant.

The present application provides use of the lime composition for treating wastewaters. The lime composition may be any lime composition disclosed herein and the wastewaters may be treated with any of the methods disclosed herein.

For example, the present method may be carried out with a treatment system comprising one or more treatment tanks or reactors, which may be arranged at an existing anaerobic processing system, such as at a plant, with only minor or moderate modifications. No large investments or redesigning existing systems are required. The tanks or reactors may be equipped with one or more heating, mixing and/or aerating means, as well as with suitable one or more inlets and outlets, sensors, pumps, valves, actuators and the like parts. The system may be controlled by an electronic controlling means, such as an electronic control unit, which may be operatively connected to the parts of the system, and arranged to control the system to facilitate carrying out the present method. The control unit may be for example arranged to provide and maintain desired temperature, desired pH, desired flow of liquids, desired addition of substances, desired level of mixing and/or aeration, desired level of wastewater, and the like operations, by controlling mixing means, aerating means, pumps, actuators connected to pumps, valves or other means, heating means such as heating elements, source of air or steam, and the like. For example the flow of solids, liquids and gases may be controlled by providing a valve operatively connected to the control unit and operatively controllable by the control unit. A valve may be operatively controllable or it may be connected to an actuator, which is operatively controllable. Operatively controllable refers to a device which is electronically operatively connected or connectable to the electronic controlling means and can be controlled, such as monitored and/or operated, by the electronic controlling means. Operatively connected may be operatively controlled, when applicable. The controlling means may be manual, automatic or semi-automatic.

The electronic controlling means may comprise one or more processors and memory, and a user interface, a display, a keyboard, touch screen and/or other inputting means, power connection, a network connection, which may be wired and/or wireless, and/or connections to each of the controllable means of the apparatus as disclosed herein. The electronic controlling means may comprise one or more computers and/or embedded systems. The electronic controlling means may comprise software, which is arranged, when run with the processor, to carry out one or more controlling actions to carry out the present method or part thereof, and optionally one or more other methods, in general the operation of the system. As the means of the system, including any actuators, valves, relays, motors, such as electric motors, pumps, heating means, sensors, cameras and the like parts, which may be required to monitor and carry out operations, are electronically connected to the controlling means, the controlling means can be arranged, including programmed, to operate these means. By controlling said means it is possible to obtain and/or maintain the desired operation of the system. A desired operation may comprise for example obtaining and/or maintaining a certain (predetermined) value, such as keeping a variable at a defined range by providing controlling actions having effect to the variable, such as temperature, flow speed, rotation speed, level of liquid or suspension, such as wastewater, pH, concentration of a substance, and the like, and/or inputting and/or outputting a substance, such as liquid, solids and/or gas.

In one example of an applicable system a first tank is equipped with a mixer comprising a mixing blade connected to an actuator, which may be an electric motor. The actuator may be operatively connected to a control unit. The first tank is arranged to receive the wastewater to be treated. The lime composition is added to the first tank from a separate tank, such as a lime storage tank.

The system may also comprise a second tank and optionally further tank(s), which allows scaling up the system according to needs.

Calcium- and P-rich sludge may be arranged to be separated, preferable from the bottom of the tank, and conveyed to further processing and/or end use, such as agricultural use as a pH adjusting agent and/or fertilizer. After precipitation, aeration of the treated wastewater releases NH₃. From an aeration tank NH₃ may be arranged to be separated and/or conveyed to further processing, such to a scrubbing or liquefaction. NH₃ may be separated and/or conveyed from the upper part of the tank. After separating the sludge and NH₃, the pH of the treated water must be decreased to neutral levels (pH about 7) by introducing acid solution into the precipitation tank, so the apparatus or a tank may comprise means for providing acid, such as a source of acid equipped with a valve to control the dosing of the acid. Afterwards, the neutralized wastewater may be further directed to a local wastewater treatment plant.

The present disclosure provides a wastewater treatment system arranged to receive wastewaters directly from an anaerobic digestion plant comprising one or more reactors for anaerobic digestion and preferably for biogas production. The anaerobic digestion plant may be for example a biogas plant or other applicable plant, which utilizes anaerobic digestion for treating organic material, such as waste. The anaerobic digestion plant may be arranged to sterilize or hygienise the formed waste to kill microbes, especially pathogens, for example by using high temperature. However if the wastewater would be from a source which is not, or is incompletely, sterilized or hygienised, the present treatment method will provide high temperature and highly alkaline pH ensuring eliminating any living microbes present in the source wastewater.

The wastewater treatment system is connected to the anaerobic digestion plant, for example by using suitable tubing or other means for conveying the wastewaters from the plant to the system, more particularly to the reactor(s) in the system, so the reactors are arranged to receive the wastewater. The reactor may have one or more inlets for receiving the wastewater, which inlets may be controllable by valves or other suitable actuators. The flow of the wastewater may be controlled, for example by using one or more valves and/or other means or actuators, which may be operatively connected to a controlling means. The wastewater may be provided from, in or to, or conveyed from or to, a tank, basin or other suitable container, such as a wastewater container, which may be a part of the plant or part of the wastewater treatment system.

The wastewater treatment system comprises
- one or more wastewater treatment reactors,
- one or more mixers in the one or more reactors,
- one or more heating means,
- one or more aerating means, such as mixers and/or source of air,
- an ammonia scrubber or a liquefaction unit,
- an inlet for providing lime composition in dry form to the reactor,
- an inlet for providing acid to the reactor,
- an outlet for removing precipitate from the reactor,
- an outlet for removing supernatant from the reactor, and
- an outlet for conveying released NH₃ to the ammonia scrubber or to the liquefaction unit, wherein the wastewater treatment system is arranged to carry out the method disclosed herein.

The system may comprise one or more controlling means, such as one or more control units. The mixers are arranged to mix the content of the reactor(s), i.e. the mixture in the reactor(s). The one or more heating means and the one or more aerating means are arranged to heat and aerate the mixture in the reactor(s), and may be operatively connected to a controlling means. The inlets and the outlets are connected to the reactor(s), and may be equipped with valves, pumps and/or other actuators for controlling the flow of substances, such as liquids, suspensions or solids, and may be operatively connected to a controlling means. The inlet for providing acid may be connected to a source of acid, such as an acid container, which may be equipped with a valve, a pump and/or other suitable actuators. The acid may be provided as a solution, and it may be mixed to the water by using the one or more mixers. The system and/or the reactor may comprise one or more further inlets and/or outlets, for example inlet(s) for taking samples from the reactor and/or for monitoring the contents of the reactor, for example by one or more sensor to implement in-line and/or real-time monitoring.

In one embodiment the wastewater treatment system comprises controlling means arranged to (operatively) control the wastewater treatment system to carry out the method.

In one embodiment the wastewater treatment comprises
- controlling means,
- one or more pH sensors arranged to measure the pH of the content of the reactor, the one or more pH sensors being connected to the controlling means,
- one or more conveying means and/or valves arranged to provide lime composition to the inlet, the conveying means and/or valves being operatively connected to the controlling means,
wherein the controlling means is arranged to monitor the pH of the content of the wastewater treatment reactor, such as the wastewater, with the one or more pH sensors and to control the one or more conveying means and/or valves to provide lime composition in an amount and/or in a rate capable of increasing the pH of the content, such as the wastewater, to 12 or more, such as to about 12.5 or more.

In one embodiment the inlet for providing acid to the reactor comprises a valve operatively connected to the controlling means, and
-wherein the controlling means is arranged to monitor the pH of the content of the wastewater treatment reactor, such as the supernatant, with the one or more pH sensors and to control the valve to provide acid in an amount and/or in a rate capable of neutralizing the content of the reactor, such as the supernatant. For example the pH may be adjusted to 6-8, or to 6.5-7.5, such as to about 7. When the desired pH is obtained, the controlling means may be arranged to stop the conveying means and/or close the valve.

One example provides a biogas plant or the like anaerobic treatment plant or system comprising one or more reactors for anaerobic digestion and preferably biogas production, wherein wastewater from the one or more reactors is arranged to be conveyed to a wastewater treatment reactor, or to a system comprising a wastewater treatment reactor, arranged to carry out the method described herein.

The wastewater treatment reactor, or the system comprising the wastewater treatment reactor, may further comprise one or more further parts or features disclosed herein, and the applicable parts of the system or reactor may be operatively connected to the controlling means, preferably to carry out the method. For example the system, more particularly the reactor, may comprise one or more pH sensors, temperature sensors, flow sensors, liquid or suspension level sensor, conductivity sensors, optical sensors, weight sensors, and/or other sensors, which may be connected to a control unit and/or to a measuring electronics. The properties detected by the sensors may be used for maintaining desired conditions in the system and/or reaction. For example the controlling means can be arranged to carry out controlling and/or adjusting actions and/or other operations as a feedback to one or more measured features to maintain one or more properties of the system at a desired range or level, such as temperature or pH.

In one example disclosed in Figure 2, the system comprises a wastewater tank 30 arranged to receive the wastewater from the plant. The wastewater is arranged to be conveyed from the wastewater tank 30 via a pump 37 and a distributing valve 38 to a first reactor 10 and to a second reactor 11, which are equipped with a mixer 12 comprising an actuator, such as an electric motor, and a mixer blade. The system comprises a lime silo 14 for providing lime composition to the reactors 10,11, wherein the flow of the solid lime may be controlled by operating a valve and/or a conveyer, such as a screw conveyer. The reactors comprise outlets 16, 17 at the bottom of each reactor, which may be controlled by operating a valve, to output the content of the reactors, including the formed precipitate and separated water, the outlets 16, 17 being arranged to convey or transfer the material by using pumps 36 or other actuators to a filter 18, wherein purified water is separated from solids. The solids are conveyed to a lime storage 20. The purified water may be arranged to be conveyed to further use and/or further processing via a water outlet 22, and it may be recycled, or it may be discarded, for example conveyed to a wastewater treatment plant or the like.

The system comprises a source of aeration 24 connected to the reactors 10, 11, which source of aeration 24 may be controlled by one or more valves, electric motors and/or other actuators, depending on the type of source of aeration. The reactors 10, 11 comprise outlets 26 for conveying NH₃ released in the process to NH₃ recovery 28, which may include one or more scrubbers and/or one or more liquefaction units or systems.

The system comprises a pH adjustment means comprising an acid tank 32 and a dosing pump 34 for providing acid solution to the tanks 10, 11 . The dosing of acid can be controlled by operating the pump 34 and/or valves, and the acid may be mixed in the tanks 10, 11 with the mixers 12.

The present method and related apparatus or system also enables controlling process and production chains relating to the wastewaters. Such chains may involve one or more operators. For example the wastewater may be produced and/or provided by a first operator, the present method may be carried out by the same operator or a different operator, which may be a second operator. One operator, which may be the same or a third operator, may utilize the formed end product, and the lime composition may be provided by one operator, which may be a fourth operator. The present method facilitates the operations between the operators. For example the materials and applicable systems may be provided in such form that facilitates one operator to provide the material and other operator to receive and use the material.

### Examples

### Example 1: Precipitation of reject water from anaerobic digestors with iron, aluminium salts and lime composition

Different chemicals were tested for their ability to precipitate reject water from anaerobic digestors of a biogas plant. The flocculator setup included a sample volume of 600 ml, fast mixing (300 rpm) for 1 minute, flocculation time of 10 minutes at 40 rpm and sedimentation time of 1 hour.

### Precipitation with FeCl₃ (PIX 111)

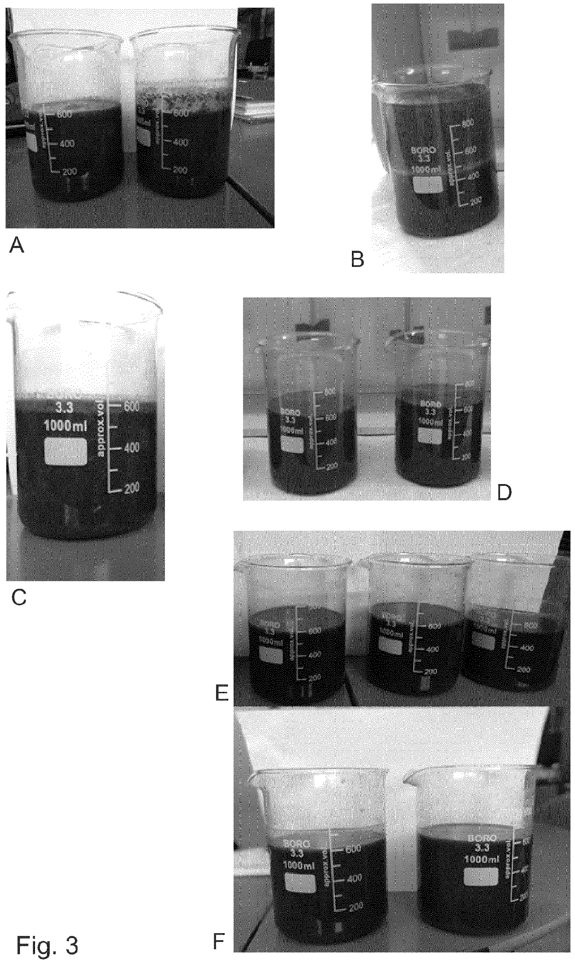

The following amounts of Fe were added to the reject water: 500, 1000 and 2000 mg /l. The results are shown in Figures 3a and 3b. No visible precipitation occurred although the treated water reached pH of 6 at the highest addition (Figure 3a). Excessive foaming occurs at higher Fe additions (Fig 3b). pH after sedimentation was 6.1-6.8.
Main reaction: Fe³⁺ + PO₄³⁻ = FePO₄
Side reaction: Fe³⁺ + 3 H₂O = Fe(OH)₃ + 3H⁺

### Precipitation with Al salts (Pluspac 1465)

The Al amounts added to the reject water were the following: 1000, 1333 and 1666 mg AI/I. The results are shown in Figures 3c and 3d. No precipitation was observed. pH after attempted sedimentation was 6.55-6.6.
Main reaction: Al³⁺ + PO₄³⁻ = AlPO₄
Side reaction: Al³⁺ + 3 H₂O = Al(OH)₃ + 3H⁺

### Precipitation with Al salts (Nalco 8187)

Although the feed was treated with relatively high amounts of Nalco 8187 (6.6-26.6 ml/l reject water), no precipitation occurred. The results are shown in Figures 3e and 3f. pH after attempted sedimentation was 7.15-8.17.

### Precipitation with lime composition in a dry powder form

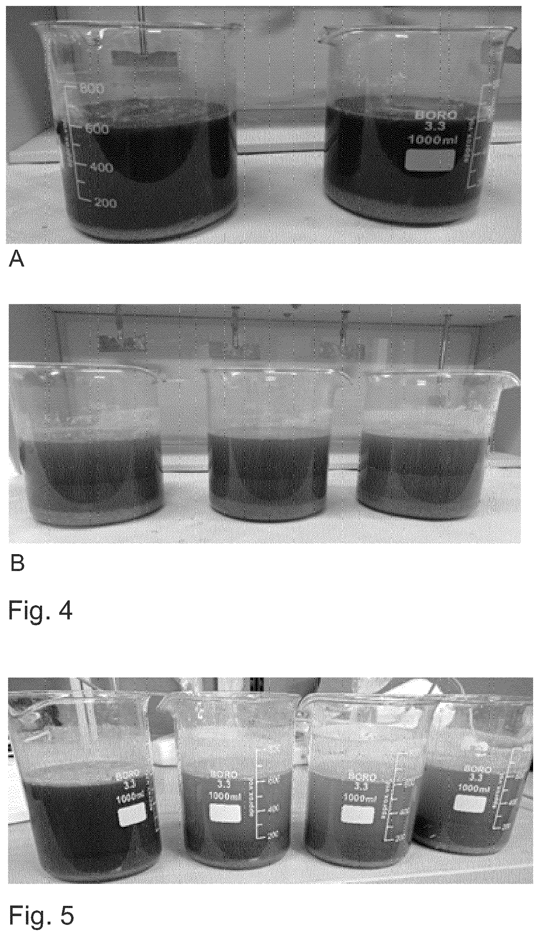

In these experiments, the lime composition contained over 85% of Ca(OH)₂ with particles smaller than 2 mm. Five different amounts were tested: 20, 40, 50, 60 and 70 g lime composition / I reject water. The results are shown in Figures 4a and 4b. The range 50-70 g lime composition / l reject water was found especially advantageous and was used in further tests.

Dissolved P concentration in the feed was 176 mg/l.

Phosphorus concentrations in treated water were:
At 50 g lime composition / l - 76 mg P/l (56.8% reduction)
At 60 g lime composition / l - 48.5 mg P/l (72.4 % reduction)
At 70 g lime composition / l - 66 mg P/l (62.5 % reduction)

Main reaction: 5Ca²⁺ + 7OH⁻ + 3H₂PO₄⁻ = Ca₅OH(PO₄)₃ (hydroxyapatite) + 6H₂O
Side reaction: Ca²⁺ + CO₃²⁻ = CaCOs

The estimated P removal efficiency is 1.85 kg P/ton lime composition added.

Table 1 shows pH, electrical conductivity (EC) and total dissolved solids (TDS) solids of lime-treated reject water.

**Table 1.**

| Feed | 50 g lime composition /l | 60 g lime composition /l | 70 g lime composition /l |
|---|---|---|---|
| pH=8.68 | pH=12.40 | pH=12.40 | pH=12.45 |
| EC=12.32 mS/cm | EC=6.93 mS/cm | EC=6.35 mS/cm | EC=6.55 mS/cm |
| TDS=7.88 g/l | TDS=4.43 g/l | TDS=4.06 g/l | TDS=4.19 g/l |

About 50% reduction in the amount of TDS was observed due to the removal of phosphate, carbonate and ammonium.

Table 2 shows carbonate and total alkalinity of lime-treated reject water

**Table 2.**

| | Feed | 50 g lime composition /l | 60 g lime composition /l | 70 g lime composition /l |
|---|---|---|---|---|
| Carbonate alkalinity (mmol/l) | 143 | 200 | 202 | 1968 |
| Total alkalinity (mmol/l) | 166 | 228 | 224 | 222 |

The reject water is a highly NH₄-NH₃ buffered system:

NH4⁺ ↔ NH₃

Shifting towards right in alkaline solutions, ammonia solubility decreasing with increasing temperature

NH4⁺ + OH⁻ = NH₃ + H₂O

NH₃ + H₃O⁺ = NH4⁺ + H₂O

Alkalinity in lime-treated water = alkalinity in feed - carbonate - phosphate + hydroxide + ammonia

### Addition of 60 g lime composition /l reject water

Phosphorus concentration in the feed was 105 mg P/l, total solids was 23.24 g/l and TDS was 5.82 g/l. Phosphorus concentration in the treated water was 32.5 mg P/l, total solids was 11.99 g/l and TDS was 3.81 g/l. The addition of 60 g Ca(OH)₂/l reject water decreased the dissolved P concentration by 69%, total solids by 48% and TDS by 35%.

### Chemical characterization of the nutrient-rich sludge

Table 3 shows the amounts of P, Ca and heavy metals present in the nutrient-rich sludge. Used lime composition dosages were between 30 and 50 g/l. The chemical characterization of the obtained sludge revealed that it is rich in Ca but also contains additional P obtained through the precipitation of Ca phosphates. Moreover, the heavy metal amounts in the sludge are well under the limits for soil amendments in Finland. Thus, the sludge would represent a competitive soil amendment that would increase the soil pH while delivering plant available P and NH₄.

**Table 3. Chemical characterization of the sludge**

| | | | | Maximum permissible concentrations in soil amendments in Finland |
|---|---|---|---|---|
| Lime composition addition (g/l) | 30 | 40 | 50 | |
| pH of the sludge | 12.5 | 12.5 | 12.5 | |
| Dry matter (%) | 13.6 | 15.3 | 16.5 | |
| Total P (g/kg) | 0.79 | 0.6 | 0.46 | |
| Total Ca (g/kg) | 390 | 430 | 400 | |
| As (mg/kg) | < 2 | < 2 | < 2 | 25 |
| Cd (mg/kg) | < 0.5 | < 0.5 | < 0.5 | 1.5 |
| Cr (mg/kg) | < 2.5 | < 2.5 | < 2.5 | 300 |
| Hg (mg/kg) | < 1 | < 1 | < 1 | 1 |
| Ni (mg/kg) | < 4 | < 4 | < 4 | 100 |
| Pb (mg/kg) | < 2 | < 2 | < 2 | 100 |
| Zn (mg/kg) | < 20 | < 20 | < 20 | 1500 |

### Conclusions

The addition of Fe and Al salts did not initiate precipitation of the reject water. An efficient precipitation of reject water starts at additions higher than 50 g lime composition/I. Significant reductions in dissolved P and solids were achieved.

### Example 2

The results from preliminary tests, such as the tests disclosed in Example 1, showed that Fe and Al-containing salts are not suitable because they initiate excessive foaming without inducing efficient precipitation. The foaming possibly results from gas production (mainly CO₂) as the addition of these precipitants lowers the pH of the reject water with high alkalinity. Use of conventional lime milk was also found unsuitable for the present purposes as it was difficult to obtain efficient precipitating and the high volume of the lime milk was not practical for the present uses.

A dry powdery slaked lime-based industrial by-product having an average particle diameter less than 3 mm as a reactive material was found very efficient for treating the rejects, and it was selected for further tests for treating reject waters. This material is a by-product originating from an industrial lime kiln. In the tests it was found that this material could increase the pH of the treated water to 12 or more, as shown in Table 1, which was not the case with all lime-based industrial by-products, which could increase the pH only to about 11, which caused hardly any precipitation in the present type of waters.

Table 4 presents the typical chemical composition of on industrial by-product; the product mainly contains Ca(OH)₂ (over 80%) and small amounts of substances which are useful as nutrients, such as P and Mg. The heavy metal amounts in this lime mixture are well under the permissible levels for soil amendments in Finland.

**Table 4. Chemical composition of the industrial by-product rich in Ca(OH)₂**

| | | Max. permissible concentrations in soil amendments in Finland |
|---|---|---|
| Density (kg/m³) | 728 | |
| Dry matter (%);Ca(OH)₂ (%) | 100; 88-94 | |
| Total P (g/kg) | 4.2 | |
| Total Ca (g/kg) | 542 | |
| Magnesium (Mg) | 5.2 | |
| As (mg/kg) | < 2 | 25 |
| Cd (mg/kg) | 0.64 | 1.5 |
| Cr (mg/kg) | 5.2 | 300 |
| Hg (mg/kg) | < 1 | 1 |
| Ni (mg/kg) | < 4 | 100 |
| Pb (mg/kg) | <2 | 100 |
| Zn (mg/kg) | 140 | 1500 |

### Process description

The flocculator set-up included the same adjustments as in Example 1 and 2: a sample volume of 600 ml, fast mixing (300 rpm) for 1 minute, flocculation time of 10 minutes at 40 rpm and sedimentation time of 1 hour.

The application of the industrial by-product caused an efficient precipitation and significant reductions in few quality parameters in the reject water (Figure 5). For example, the amounts of suspended solids and dissolved P in the reject water were reduced by about 80% and 70%, respectively. Moreover, similar reductions in BOD and COD of 15-30% were observed. The addition of this product caused an instant evaporation of NH₃ with a reduction of about 30%.

### Aeration of treated reject water

The purpose of this step was to further remove the dissolved NH₃ in the treated reject water by aeration. The aeration of the treated reject water started after separating the sedimented sludge. Laboratory experiments showed that the introduction of air initiated the additional removal of the dissolved NH₃ (in total 90%) from the reject water and the required air volume at room temperature is 9000 m³/m³ treated water.

### Example 3

In addition to tests with lime-rich products that proved to be efficient, supplementary experiments exploited soil conditioners and industrial by-products containing lower amounts of Ca(OH)₂ (typically under 50%). These products were fine powders with particles smaller than 2 mm. The flocculator set-up exploited the same adjustments as in Example 1 and 2.

The tests revealed that using fine powders with lower concentrations of Ca(OH)₂ were not able to counteract the buffering capacity of the reject water, they did not increase the pH of the solution over 12 and therefore no efficient precipitation occurred. Only the lime composition with substantial concentration of Ca(OH)₂ provided the desired effect. The following examples are presented in Figure 5 from left to right.
a) 30 kg reactive lime composition (over 80% of Ca(OH)₂)/l, pH=12.3;
b) 10 kg reactive lime composition (over 80% of Ca(OH)₂)/l and 40 kg less reactive by-product/l (< 50% of Ca(OH)₂), pH=12.17;
c) 10 kg less reactive by-product (< 50% of Ca(OH)₂)/l, pH=9.7;
d) 10 kg less reactive by-product (< 40% of Ca(OH)₂), pH=8.

### Example 4

Additional large-scale experiments involved the use of a mixing tank or reactor with a capacity of 1000 l and a lime storage tank (capacity of 100 l). The reactor was equipped with a mixer that enabled fast mixing only and the reject water (t=50°C) was fed directly from the reject water tank at the biogas plant. Multiple tests involved batches of 800 l of reject water supplied with 40 kg of lime composition (concentration of Ca(OH)₂ was greater than 80%). The following parameters were exploited in the tests: a) mixing speed 300 rpm for 10 min and b) sedimentation time of 1 hour. The experiments showed that these parameters enabled the efficient precipitation of the reject water, the sludge formed rather rapidly and it separated from the supernatant through sedimentation. The pH of the supernatant stabilized at 12.5 while the removal of suspended solids and P reached over 70%.

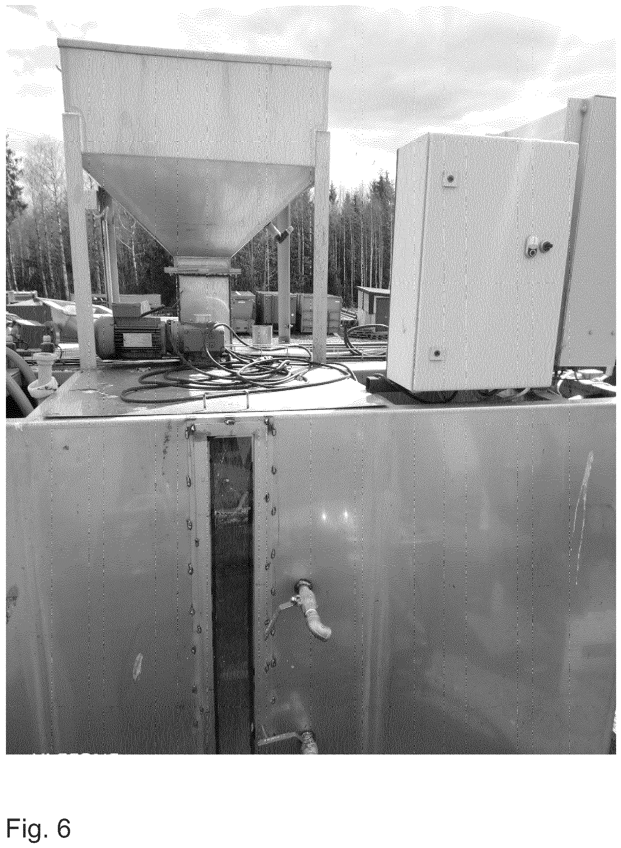

Figure 6 shows the apparatus used in these experiments. The lime storage tank in the form of a funnel, an electric motor of a mixer and a control cabin are at the top of the housing of the apparatus. The control cabin contains control means for operating the mixer. The outlets with taps at the front are for taking samples from the reactor inside the housing.

## Claims

1. A method for treating wastewaters from anaerobic digestion, the method comprising
- providing wastewater from anaerobic digestion,
- providing a lime composition comprising 80% by weight or more, such as 80-99% by weight, calcium hydroxide (Ca(OH)₂) in dry powdery form,
- mixing the lime composition in the dry powdery form with the wastewater at a temperature of 50°C or more to obtain a mixture comprising 20 g or more of the lime composition/l wastewater,
- continuing the mixing to precipitate suspended solids and phosphorus (P) to obtain a precipitate and a supernatant and to release ammonia (NH₃), and
- recovering the precipitate.

2. The method of claim 1, comprising aerating the supernatant to remove NH₃.

3. The method of claim 2, comprising adding acid to the supernatant after removing the NH₃ to neutralize the supernatant.

4. The method of any of the preceding claims, wherein the lime composition comprises a lime-based industrial by-product.

5. The method of any of the preceding claims, wherein the lime composition comprises 85-99% by weight calcium hydroxide (Ca(OH)₂), such as 87-95% by weight.

6. The method of any of the preceding claims, wherein the wastewater has a concentration of suspended solids of 1000 mg/l of the wastewater or more, a concentration of NH₄ of 1000 mg/l of the wastewater or more and/or a concentration of soluble P of 50 mg/l of the wastewater or more.

7. The method of any of the preceding claims, wherein the lime composition in a powdery form has an average particle diameter of 3 mm or less, such as 2 mm or less.

8. The method of any of the preceding claims, wherein the lime composition is provided in an amount of 20-70 g/l wastewater, such as 20-50 g/l, 30-60 g/l, 40-60 g/l or 50-70 g/l.

9. The method of any of the preceding claims, comprising providing pH of the mixture of 12 or more, or 12.5 or more.

10. The method of any of the preceding claims, wherein the anaerobic digestion comprises anaerobic digestion of a biogas plant and/or a bioreactor.

11. A wastewater treatment system arranged to receive wastewaters directly from an anaerobic digestion plant, such as a biogas plant, comprising one or more reactors for anaerobic digestion and preferably for biogas production, the wastewater treatment system comprising
- one or more wastewater treatment reactors,
- one or more mixers in the one or more reactors,
- one or more heating means,
- one or more aerating means, such as mixers and/or source of air,
- an ammonia scrubber or a liquefaction unit,
- an inlet for providing lime composition in dry form to the reactor,
- an inlet for providing acid to the reactor,
- an outlet for removing precipitate from the reactor,
- an outlet for removing supernatant from the reactor, and
- an outlet for conveying released NH₃ from the reactor to the ammonia scrubber or to the liquefaction unit, wherein the wastewater treatment system comprises controlling means arranged to control the wastewater treatment system to carry out the method of any of the preceding claims.

12. The wastewater treatment system of claim 11, comprising
- controlling means,
- one or more pH sensors arranged to measure the pH of the content of the reactor, the one or more pH sensors being connected to the controlling means,
- one or more conveying means and/or valves arranged to provide lime composition to the inlet, preferably arranged to provide lime composition in dry form to the reactor via the inlet, the conveying means and/or valves being operatively connected to the controlling means,
- wherein the controlling means is arranged to monitor the pH of the content of the wastewater treatment reactor, such as the wastewater, with the one or more pH sensors and to control the one or more conveying means and/or valves to provide lime composition in an amount and/or in a rate capable of increasing the pH of the content, such as the wastewater, to 12 or more, preferably to 12.5 or more, preferably
- wherein the inlet for providing acid to the reactor comprises a valve operatively connected to the controlling means, and
- wherein the controlling means is arranged to monitor the pH of the content of the wastewater treatment reactor, such as the supernatant, with the one or more pH sensors and to control the valve to provide acid in an amount and/or in a rate capable of neutralizing the content of the reactor, such as the supernatant.

13. Use of dry lime composition comprising 80% by weight or more, such as 80-99% by weight, calcium hydroxide (Ca(OH)₂) for treating wastewaters from anaerobic digestion, such as with the method of any of the claims 1-10.

14. The use of claim 13, where the lime composition comprises a lime-based industrial by-product.

15. A fertilizer product obtained by the method of any of the claims 1-10.
